# EUROPEAN PATENT SPECIFICATION

(11) **EP 2 924 947 B1**
(45) Date of publication and mention of the grant of the patent: **22.08.2018**
(21) Application number: 15151401.5
(22) Date of filing: 16.01.2015
(51) Int. Cl.: H04L 29/06

(54) **METHOD AND APPARATUS FOR CONTROLLING ACCESS**
ZUGANGSSTEUERUNGSVERFAHREN UND VORRICHTUNG
PROCÉDÉ ET APPAREIL DE CONTRÔLE D'ACCÈS

(30) Priority: 28.03.2014 CN 201410123103
(43) Date of publication of application: 30.09.2015
(73) Proprietor: Xiaomi Inc., Beijing 100085 (CN)
(72) Inventor: Liu, Tiejun, 100085 Beijing (CN); Li, Zheng, 100085 Beijing (CN); Chen, Xianlin, 100085 Beijing (CN); Cheng, Liang, 100085 Beijing (CN)
(74) Representative: Delumeau, François Guy

(56) References cited:
- WO-A1-2013/086836
- US-A1- 2011 107 436

## Description

### TECHNICAL FIELD

The present disclosure generally relates to the field of communication, and more particularly, to a method and an apparatus for controlling access.

### BACKGROUND

Digital Living Network Alliance (DLNA) is a nonprofit organization which was started by Sony, Intel and Microsoft, and is intended to solve problems about sharing digital media contents among consumer electronic devices.

In a network architecture based on DLNA, a DLNA client and a DLNA server are included, and the DLNA client is coupled with the DLNA server via a wired network or a wireless network. The DLNA server is configured to provide media contents, including providing a platform for sharing multimedia files. This platform supports sharing of media contents such as pictures, music, videos and so on. The DLNA client is configured to access and play the media contents shared by the DLNA server.

Document D1 (WO 2013/086836 A1) discloses a rights control method and an apparatus for Digital Living Network Alliance (DLNA) to improve the security of a DLNA apparatus.

Document D2 (US 2011/107436 A1) provides improved apparatus and methods for device authorization in a premises network.

During devising the present disclosure, the inventors of the present disclosure found that the above manner at least has the following defects: in related technologies, there is not any management or control on the access of the DLNA client, and the DLNA client might initiate an access request to the DLNA server arbitrarily, which resulted in occurrence of malicious access and potential security risks.

### SUMMARY

In order to solve the problem in related technologies that a DLNA client may initiate an access request to a DLNA server arbitrarily which results in malicious access and potential security risks, the embodiments of the present disclosure provide a method and an apparatus for controlling access. The technical solutions are provided as follows:
According to a first aspect of embodiments of the present disclosure, a method for controlling access according to Claim 1 is provided. This method is applied in a Digital Living Network Alliance (DLNA) server
The advantageous effect of the technical solution provided by this embodiment includes:
By obtaining a MAC address used by a DLNA client after receiving an access request sent from the DLNA client, the DLNA server detects whether the MAC address exists in a preset blacklist, and denies an access of the DLNA client if the MAC address exists in the preset blacklist. Thus, the problem in related technologies that a DLNA client may initiate an access request to a DLNA server arbitrarily which results in malicious access and potential security risks is solved. In the embodiments of the present disclosure, by setting a preset blacklist, access requests sent by some DLNA clients from illegal MAC addresses or MAC addresses having no access right are effectively eliminated so as to make a DLNA client not capable of initiating an access request to a DLNA server arbitrarily and thereby some malicious accesses and potential security risks are sufficiently avoided.

In an optional embodiment, the method further comprises:
generating a key corresponding to the MAC address, if the MAC address does not exist in the pre-stored corresponding relationships;
adding the MAC address and the key corresponding to the MAC address into the pre-stored corresponding relationships; and
sending the key to the DLNA client which the MAC address corresponds to.

In an optional embodiment, the method further comprises:
obtaining the preset blacklist which includes illegal MAC addresses and/or MAC addresses having no access right.

According to a second aspect of embodiments of the present disclosure, an apparatus for controlling access according to Claim 4 is provided

In an optional embodiment, the apparatus further comprises:
a key generating module configured to generate a key corresponding to the MAC address if the MAC address does not exist in the pre-stored corresponding relationships;
a corresponding storing module configured to add the MAC address and the key corresponding to the MAC address into the pre-stored corresponding relationships; and
a key sending module configured to send the key to the DLNA client to which the MAC address corresponds.

In an optional embodiment, the apparatus further comprises:
a list obtaining module configured to obtain the preset blacklist which includes illegal MAC addresses and/or MAC addresses having no access right.

According to a third aspect of embodiments of the present disclosure, an apparatus for controlling access according to Claim 7 is provided. In an optional embodiment, the steps of the method controlling access are determined by computer program instructions.

Consequently, according to a fourth aspect, the invention is also directed to a computer program for executing the steps of a method controlling access as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It shall be appreciated that both the foregoing general description and the following detailed description are exemplary only and are not restrictive of the present disclosure.

### BRIEF DESCRIPTION OF THE DRAWINGS

In order to explain the embodiments of the present disclosure more clearly, simple introduction of the drawings used for describing the embodiments will be given below. It is apparent that the accompanying drawings only illustrate some embodiments of the present disclosure, and other drawings may be obtained by one of ordinary skill in the art according to these drawings without inventive labor.
Fig. 1 is a flowchart showing a method for controlling access according to an exemplary embodiment;
Fig. 2 is a flowchart showing a method for controlling access according to another exemplary embodiment;
Fig. 3 is a block diagram showing an apparatus for controlling access according to an exemplary embodiment;
Fig. 4 is a block diagram showing an apparatus for controlling access according to another exemplary embodiments; and
Fig. 5 is a block diagram showing an apparatus for controlling access according to an exemplary embodiment of the present disclosure.

Specific embodiments in this disclosure have been shown by way of example in the foregoing drawings and are hereinafter described in detail. The figures and written description are not intended to limit the scope of the concepts of the present disclosure in any manner. Rather, they are provided to illustrate the concepts of the present disclosure to one of ordinary skill in this art with reference to particular embodiments.

### DETAILED DESCRIPTION

In order to make technical solutions and advantages of the present disclosure more apparent, the present disclosure will be further described in detail with reference to the accompanying drawings. Obviously, the described embodiments are only a part of but not all of the embodiments of the present disclosure. Based on the embodiments in the present disclosure, all other embodiments which may be obtained by one of ordinary skill in this art without inventive labor belong to the scope of the present disclosure.

Before introduction of the method for controlling access provided by the present disclosure, a DLNA server involved in the present disclosure needs to be introduced firstly. The DLNA server is a server for realizing sharing of media contents such as pictures, music, videos and so on. The DLNA server may be computer software for realizing the above function, and may also be a computer or a computer system for executing the above computer software.

When the DLNA server is computer software for realizing the sharing function of media contents such as pictures, music, videos and so on, the DLNA server may be operated on a DLNA device. The DLNA device may be an intelligent router which, in addition to routing functions realized by usual routers, has an independent operating system, in which a user may install various applications. The operating system may be a heavily customized operating system based on OpenWrt. The DLNA device further comprises a storage medium (for example, a hard disk) which is configured to store files such as pictures, music and videos. Optionally, the DLNA device further comprises a USB interface which may support access of mobile storage devices such as a USB flash driver or a mobile hard disk.

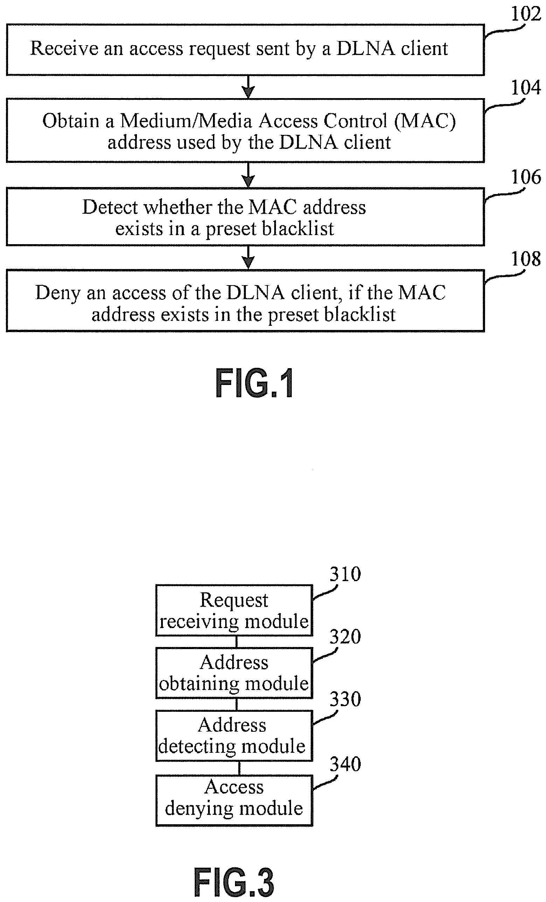

Fig. 1 is a flowchart showing a method for controlling access according to an exemplary embodiment. The present embodiment is illustrated by taking an example where the method for controlling access is applied in a DLNA server. The method for controlling access may comprise the following steps.

In step 102, an access request sent from a DLNA client is received.

In step 104, a Medium/Media Access Control (MAC) address used by the DLNA client is obtained.

In step 106, whether the MAC address exists in a preset blacklist is detected.

In step 108, an access of the DLNA client is denied if the MAC address exists in the preset blacklist.

To sum up, in the method for controlling access provided by the present embodiment, by obtaining a MAC address used by a DLNA client after receiving an access request sent from the DLNA client, the DLNA server detects whether the MAC address exists in a preset blacklist, and denies an access of the DLNA client if the MAC address exists in the preset blacklist. Thus, the problem in related technologies that a DLNA client may initiate an access request to a DLNA server arbitrarily which results in malicious access and potential security risks is solved. In the present embodiment, by setting a preset blacklist, access requests sent by some DLNA clients from illegal MAC addresses or MAC addresses having no access right are effectively eliminated so as to make a DLNA client not capable of initiating an access request to a DLNA server arbitrarily and thereby some malicious accesses and potential security risks are sufficiently avoided.

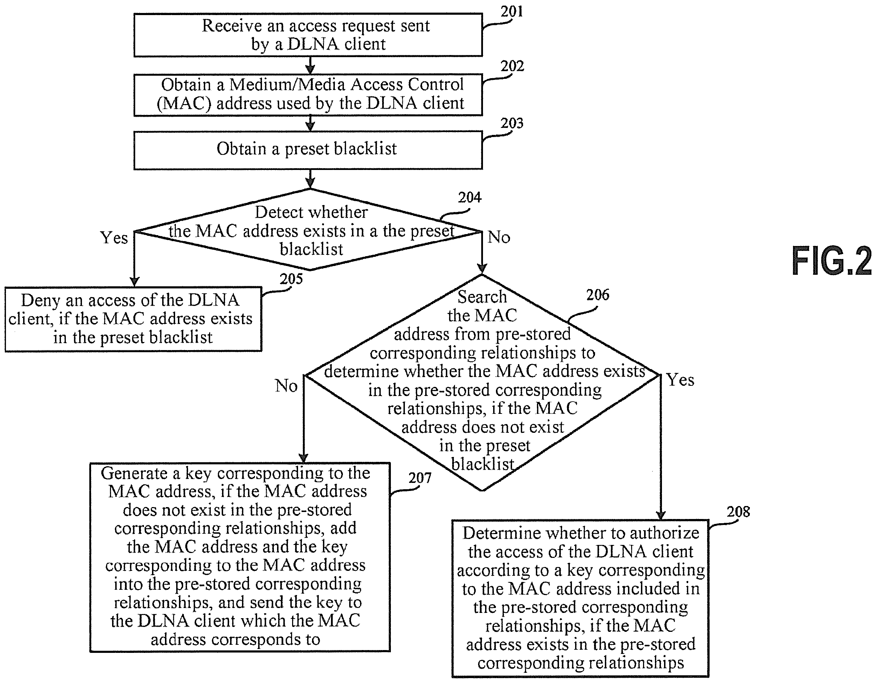

Fig. 2 is a flowchart showing a method for controlling access according to another exemplary embodiment. The present embodiment is illustrated by taking an example where the method for controlling access is applied in a DLNA server. The method for controlling access may comprise the following steps.

In step 201, an access request sent from a DLNA client is received.

The DLNA client may be coupled with the DLNA server via a wired network or a wireless network. When the DLNA client needs to access files shared by the DLNA server, the DLNA client sends an access request to the DLNA server; correspondingly, the DLNA server receives the access request sent from the DLNA client.

In step 202, a Medium/Media Access Control (MAC) address used by the DLNA client is obtained.

After receiving the access request, the DLNA server obtains the Medium/Media Access Control (MAC) address used by the DLNA client. For example, the DLNA server firstly obtains an Internet Protocol (IP) address of the DLNA client, and then reversely searches a MAC address corresponding to the IP address by Address Resolution Protocol (ARP), and the searched MAC address is the MAC address used by the DLNA client.

Since the IP address used by the DLNA client may continuously change but its MAC address does not change, in the method for controlling access provided by the present embodiment, the MAC address used by the DLNA client is used to determine whether to authorize the access of the DLNA client.

In step 203, a preset blacklist is obtained.

The DLNA server obtains a preset blacklist which includes illegal MAC addresses and/or MAC addresses having no access right. The MAC addresses in the preset blacklist are managed by a user (for example, a network administrator), including amending, adding or removing and so on. The user (for example, a network administrator) can view MAC addresses of DLNA clients which are coupled to a DLNA server. If the network administrator does not want a DLNA client, to which a certain MAC address corresponds, to have an access right, i.e., he does not want the DLNA client to read files shared by the DLNA server, he may adds the MAC address of the DLNA client into the blacklist.

In an implementation, a DLNA device in which a DLNA server is operated may further operate an application named Datacenter Server which is a server type application. The Datacenter Server comprises two Application Programming Interfaces (APIs), one of the APIs may be used for obtaining and displaying the MAC addresses of all the DLNA clients which are currently coupled to the DLNA server, and the other one of the APIs may be used for adding any one MAC address into the preset blacklist. When the network administrator needs to add a certain MAC address into the preset blacklist, other one of the APIs may be invoked by triggering corresponding instructions so as to realize addition of the MAC address into the preset blacklist.

Since the DLNA server and the Datacenter Server are simultaneously operated in the DLNA device, the DLNA server may obtain the preset blacklist from the Datacenter Server.

In addition, the above step 203 may be performed before steps 201 to 202, or performed after steps 201 to 202, or performed simultaneously with steps 201 to 202. The present embodiment is illustrated by taking an example where step 203 is performed after steps 201 to 202, and the present disclosure does not impose limitations on this.

In step 204, whether the MAC address exists in the preset blacklist is detected.

For example, after obtaining the MAC address of the DLNA client currently sending the access request and the preset blacklist, the DLNA server detects whether the MAC address exists in the preset blacklist.

In step 205, if the MAC address exists in the preset blacklist, an access of the DLNA client is denied.

If the MAC address exists in the preset blacklist, the DLNA server denies the access of the DLNA client. When the MAC address of the DLNA client sending the access request exists in the preset blacklist, it is indicated that the MAC address is an illegal MAC address or a MAC address having no access right, and thus the DLNA server denies the access of the DLNA client to make the DLNA client not capable of reading the shared files, and thereby security of files are sufficiently guaranteed.

In step 206, if the MAC address does not exist in the preset blacklist, the MAC address is searched from pre-stored corresponding relationships.

If the MAC address does not exist in the preset blacklist, the DLNA server searches the MAC address, by which the current access request is sent, from pre-stored corresponding relationships to determine whether the MAC address exists in the pre-stored corresponding relationships. The pre-stored corresponding relationships include corresponding relationships between different MAC addresses and different keys, and the MAC addresses in the pre-stored corresponding relationships are MAC addresses of DLNA clients which have ever successfully built access connection.

In order to avoid a DLNA client from obtaining an access right by ARP cheating, in the method for controlling access provided by the present embodiment, pre-stored corresponding relationships are provided in a DLNA server. ARP cheating refers to that a DLNA client counterfeits its actual MAC address into a fake MAC address by means of counterfeiting a MAC address so as to cheat a DLNA server. For example, an actual MAC address of a certain DLNA client is A which is a member in a preset blacklist, and in order to obtain an access right, the DLNA client counterfeits a fake MAC address B which is not a member in the blacklist. Under such condition, after receiving an access request sent from the DLNA client, a DLNA server will search and obtain the fake MAC address B, and thus the access request sent from the DLNA client may not be effectively denied.

Thus, the DLNA server provides a corresponding key for a MAC address of each DLNA client which has successfully built an access connection. When a DLNA client builds an access connection with a DLNA server for the first time, that is, when the DLNA server authorizes an access request sent from the DLNA client for the first time, the DLNA server generates a key corresponding to a MAC address of the DLNA client, and adds a corresponding relationship between the MAC address and the key into the pre-stored corresponding relationships.

Meanwhile, the DLNA server sends the key to the DLNA client which the MAC address corresponds to, and requests the DLNA client to carry the key in later-sent access requests, otherwise the DLNA client will not obtain an access right. If the DLNA client is a client which uses a fake MAC address to send an access request, this client cannot receive the key sent from the DLNA server. Thus, that a DLNA client obtains an access right by ARP cheating can be effectively avoided. Then, the DLNA server may determine whether to authorize an access of the DLNA client by judging whether a key is carried in the access request.

In addition, in other possible implementations, if the MAC address is not in a preset blacklist, a step for authorizing an access of the DLNA client may be directly performed. The present embodiment is a preferred embodiment, and may further improve security of the DLNA system and thereby avoid some DLNA clients from obtaining an access right by ARP cheating.

In step 207, if the MAC address does not exist in the pre-stored corresponding relationships, a key corresponding to the MAC address is generated, the MAC address and the key corresponding to the MAC address are added to the pre-stored corresponding relationships, and the key is sent to the DLNA client which the MAC address corresponds to.

If the MAC address does not exist in the pre-stored corresponding relationships, it is indicated that the DLNA client is a client which sends the access request for the first time. Since it has been verified in the above step 204 that the MAC address used by the DLNA client is not in the preset blacklist, the DLNA server may authorize the access of the DLNA client under such condition and thereby build an access connection.

Meanwhile, the DLNA server generates a key corresponding to the MAC address, adds the MAC address and the key corresponding to the MAC address to the pre-stored corresponding relationships, and sends the key to the DLNA client which the MAC address corresponds to. For example, the DLNA server may send an authorization response to the DLNA client, and carry the generated key in the authorization response.

It has been explained in the above step 206 that in order to avoid the DLNA client from obtaining an access right by ARP cheating, the DLNA server provides a corresponding key for a MAC address of each DLNA client which has successfully built an access connection. While the DLNA client builds an access connection with the DLNA server for the first time, the DLNA server generates a key corresponding to the MAC address of the DLNA client, and adds a corresponding relationship between the MAC address and the key into the pre-stored corresponding relationships. Meanwhile, the DLNA server sends the key to the DLNA client which the MAC address corresponds to, and requests the DLNA client to necessarily carry the key in later-sent access requests so as to avoid some DLNA clients from obtaining an access right by ARP cheating.

In step 208, if the MAC address exists in the pre-stored corresponding relationships, whether to authorize the access of the DLNA client is determined according to the key corresponding to the MAC address included in the pre-stored corresponding relationships.

If the MAC address exists in the pre-stored corresponding relationships, it is indicated that the DLNA client has ever successfully built an access connection with the DLNA server. According to the explanation in the above step 206, the MAC address should have been stored in the pre-stored corresponding relationships and the MAC address has a corresponding key. Thus, the DLNA server may determine whether to authorize the access of the DLNA client according to the key corresponding to the MAC address included in the pre-stored corresponding relationships.

In an implementation, this step may comprise the following sub-steps.

Firstly, a key corresponding to the MAC address is obtained according to the pre-stored corresponding relationships.

Since corresponding relationships between keys and MAC addresses of DLNA clients which have ever successfully built an access connection are stored in the pre-stored corresponding relationships, when the MAC address of the DLNA client currently sending the access request is in the pre-stored corresponding relationships, the DLNA server obtains a key corresponding to the MAC address from the pre-stored corresponding relationships.

Secondly, whether a key is carried in the access request sent from the DLNA client is judged.

The DLNA server requests a DLNA client which has ever successfully built an access connection to necessarily carry a key in later-sent access requests. Thus, since the DLNA server has already determined that the DLNA client has ever successfully built an access connection with the DLNA server itself, the DLNA server judges whether the access request currently sent from the DLNA client carries a key.

Thirdly, if a key is carried in the access request and the carried key matches and the key corresponding to the MAC address, the access of the DLNA client is authorized.

If a key is carried in the access request and the carried key and the key corresponding to the MAC address are the same, it is indicated that the DLNA client built the first access connection not by ARP cheating and the DLNA client successfully received the key fed back by the DLNA server at that time. Under such condition, the DLNA server authorizes the access of the DLNA client and builds an access connection.

Fourthly, if no key is carried in the access request or the carried key does not match the key corresponding to the MAC address, the access of the DLNA client is denied.

If no key is carried or the carried key is different from the key corresponding to the MAC address, it is indicated that the DLNA client built the first access connection by ARP cheating and the DLNA client did not receive the key fed back by the DLNA server at that time. Under such condition, the DLNA server denies the access of the DLNA client.

To sum up, in the method for controlling access provided by the present embodiment, by obtaining a MAC address used by a DLNA client after receiving an access request sent from the DLNA client, the DLNA server detects whether the MAC address exists in a preset blacklist, and denies an access of the DLNA client if the MAC address exists in the preset blacklist. Thus, the problem in related technologies that a DLNA client may initiate an access request to a DLNA server arbitrarily which results in malicious access and potential security risks is solved. In the present embodiment, by setting a preset blacklist, access requests sent by some DLNA clients from illegal MAC addresses or MAC addresses having no access right are effectively eliminated so as to make a DLNA client not capable of initiating an access request to a DLNA server arbitrarily and thereby some malicious accesses and potential security risks are sufficiently avoided.

Furthermore, in the present embodiment, a corresponding key is provided for an MAC address of each DLNA client which has successfully built an access connection, a corresponding relationship between the MAC address and the key is added into pre-stored corresponding relationships, and meanwhile the key is sent to the DLNA client which the MAC address corresponds to, and the DLNA client is requested to necessarily carry the key in later-sent access requests. Thus, a DLNA client is avoided from obtaining an access right by ARP cheating, and thereby the security of the DLNA system may be further improved.

The apparatus embodiments of the present disclosure which may be configured to perform the method embodiments of the present disclosure will be explained below. For the details not disclosed in the apparatus embodiments of the present disclosure, please refer to the method embodiments of the present disclosure.

Fig. 3 is a block diagram showing an apparatus for controlling access according to an exemplary embodiment. The apparatus for controlling access may be implemented into a part or all of the DLNA server by software, hardware or combination thereof. The apparatus for controlling access may comprise a request receiving module 310, an address obtaining module 320, an address detecting module 330 and an access denying module 340.

The request receiving module 310 is configured to receive an access request sent from a DLNA client.

The address obtaining module 320 is configured to obtain a Medium/Media Access Control (MAC) address used by the DLNA client.

The address detecting module 330 is configured to detect whether the MAC address exists in a preset blacklist.

The access denying module 340 is configured to deny an access of the DLNA client, if the MAC address exists in the preset blacklist.

To sum up, in the apparatus for controlling access provided by the present embodiment, by obtaining a MAC address used by a DLNA client after receiving an access request sent from the DLNA client, the DLNA server detects whether the MAC address exists in a preset blacklist, and denies an access of the DLNA client if the MAC address exists in the preset blacklist. Thus, the problem in related technologies that a DLNA client may initiate an access request to a DLNA server arbitrarily which results in malicious access and potential security risks is solved. In the present embodiment, by setting a preset blacklist, access requests sent by some DLNA clients from illegal MAC addresses or MAC addresses having no access right are effectively eliminated so as to make a DLNA client not capable of initiating an access request to a DLNA server arbitrarily and thereby some malicious accesses and potential security risks are sufficiently avoided.

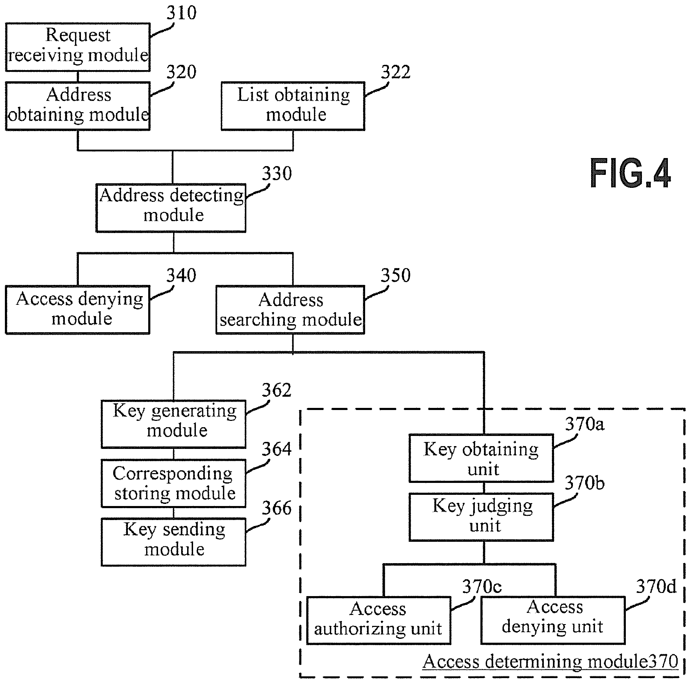

Fig. 4 is a block diagram showing an apparatus for controlling access according to another exemplary embodiment. The apparatus for controlling access may be implemented into a part or all of the DLNA server by software, hardware or combination thereof. The apparatus for controlling access may comprise a request receiving module 310, an address obtaining module 320, an address detecting module 330 and an access denying module 340.

The request receiving module 310 is configured to receive an access request sent from a DLNA client.

The address obtaining module 320 is configured to obtain a Medium/Media Access Control (MAC) address used by the DLNA client.

The apparatus for controlling access further comprises:
a list obtaining module 322 configured to obtain the preset blacklist which includes illegal MAC addresses and/or MAC addresses having no access right.

The address detecting module 330 is configured to detect whether the MAC address exists in a preset blacklist.

The access denying module 340 is configured to deny an access of the DLNA client, if the MAC address exists in the preset blacklist.

The apparatus for controlling access further comprises:
an address searching module 350 configured to search the MAC address from pre-stored corresponding relationships to determine whether the MAC address exists in the pre-stored corresponding relationships if the MAC address does not exist in the preset blacklist, the pre-stored corresponding relationships including corresponding relationships between different MAC addresses and different keys.

The apparatus for controlling access further comprises:
a key generating module 362 configured to generate a key corresponding to the MAC address if the MAC address does not exist in the pre-stored corresponding relationships;
a corresponding storing module 364 configured to add the MAC address and the key corresponding to the MAC address into the pre-stored corresponding relationships;
a key sending module 366 configured to send the key to the DLNA client which the MAC address corresponds to; and
an access determining module 370 configured to determine, if the MAC address exists in the pre-stored corresponding relationships, whether to authorize the access of the DLNA client according to a key corresponding to the MAC address included in the pre-stored corresponding relationships,.

The access determining module 370 comprises a key obtaining unit 370a, a key judging unit 370b, an access authorizing unit 370c and an access denying unit 370d.

The key obtaining unit 370a is configured to obtain the key corresponding to the MAC address according to the pre-stored corresponding relationships.

The key judging unit 370b is configured to judge whether a key is carried in the access request sent from the DLNA client.

The access authorizing unit 370c is configured to authorize the access of the DLNA client if a key is carried in the access request and the carried key matches the key corresponding to the MAC address.

The access denying unit 370d is configured to deny the access of the DLNA client if no key is carried in the access request or the carried key does not match the key corresponding to the MAC address.

To sum up, in the apparatus for controlling access provided by the present embodiment, by obtaining a MAC address used by a DLNA client after receiving an access request sent from the DLNA client, the DLNA server detects whether the MAC address exists in a preset blacklist, and denies an access of the DLNA client if the MAC address exists in the preset blacklist. Thus, the problem in related technologies that a DLNA client may initiate an access request to a DLNA server arbitrarily which results in malicious access and potential security risks is solved. In the present embodiment, by setting a preset blacklist, access requests sent by some DLNA clients from illegal MAC addresses or MAC addresses having no access right are effectively eliminated so as to make a DLNA client not capable of initiating an access request to a DLNA server arbitrarily and thereby some malicious accesses and potential security risks are sufficiently avoided.

Furthermore, in the present embodiment, a corresponding key is provided for an MAC address of each DLNA client which has successfully built an access connection, a relationship between the MAC address and the key is added into pre-stored corresponding relationships, and meanwhile the key is sent to the DLNA client which the MAC address corresponds to, and the DLNA client is requested to necessarily carry the key in later-sent access requests. Thus, a DLNA client is avoided from obtaining an access right by ARP cheating, and thereby the security of the DLNA system may be further improved.

With respect to the apparatus in the above embodiments, specific manners for respective modules performing operations have been described in detail in related method embodiments and detailed descriptions thereof are omitted herein.

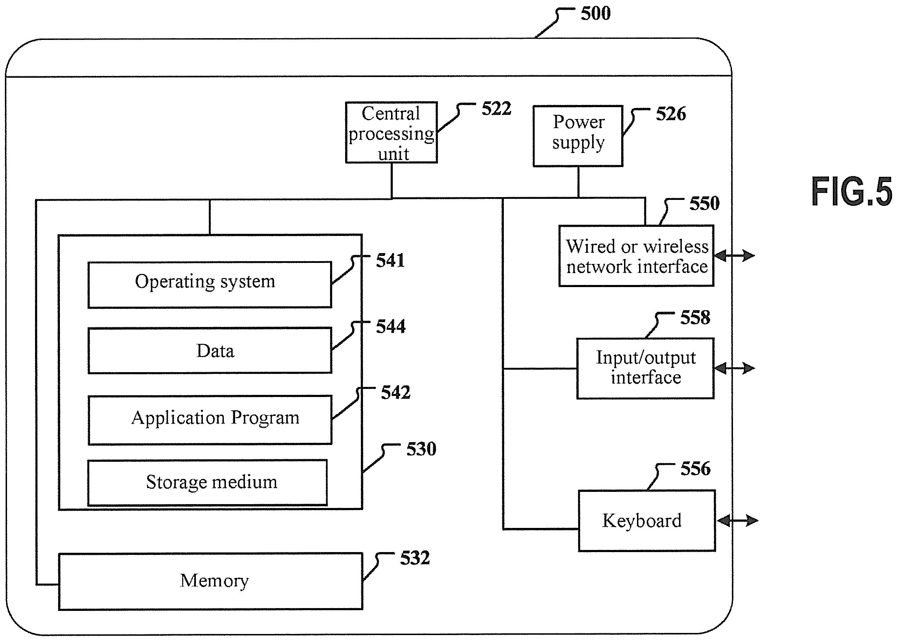

Fig. 5 is a block diagram showing an apparatus 500 for controlling access according to an exemplary embodiment of the present disclosure. For example, the apparatus 500 may be the DLNA server involved in the above embodiments of the present disclosure. The apparatus 500 may have relatively large differences due to different configurations or performances, and may comprise one or more Central Processing Units (CPUs) 522 (for example, one or more processors), a memory 532, and one or more storage mediums 530 (for example, one or more mass storage devices) for storing application program 542 or data 544. The memory 532 and the storage medium 530 may perform temporary storage or permanent storage. The program stored in the storage medium 530 may comprise one or more modules (not shown), and each module may include a series of instruction operations for the apparatus 500. Further, the CPU 522 may be configured to communicate with the storage medium 530, and to perform on the apparatus 500 a series of instruction operations in the storage medium 530.

The apparatus 500 may further comprise one or more power supplies 526, one or more wired or wireless network interfaces 550, one or more input/output interfaces 558, one or more keyboards 556 and/or one or more operating systems 541, such as Windows Server™, Mac OS X™, Unix™, Linux™, FreeBSD™, and the like.

When the instructions in the storage medium 530 are executed by the CPU 522 in the apparatus 500, the apparatus 500 may be caused to perform the method for controlling access as shown in Fig. 1 or Fig. 2.

Other embodiments of the invention will be apparent to one of ordinary skill in the art from consideration of the specification and practice of the invention disclosed herein. This application is intended to cover any variations, uses, or adaptations of the invention following the general principles thereof and including such departures from the present disclosure as come within known or customary practice in the art. It is intended that the specification and embodiments be considered as exemplary only.

## Claims

1. A method for controlling access applied in a Digital Living Network Alliance, DLNA, server, comprising the steps of:
receiving (102, 201) an access request sent from a DLNA client;
obtaining (104, 202) a Medium/Media Access Control, MAC, address used by the DLNA client;
detecting (106, 204) whether the MAC address exists in a preset blacklist;
denying (108, 205) an access of the DLNA client, if the MAC address exists in the preset blacklist;
searching (206), if the MAC address does not exist in the preset blacklist, the MAC address from pre-stored corresponding relationships to determine whether the MAC address exists in the pre-stored corresponding relationships, the pre-stored corresponding relationships comprising corresponding relationships between different MAC addresses and different keys, the MAC addresses in the pre-stored corresponding relationships being MAC addresses of DLNA clients which have ever successfully built access connection; and
determining (208), if the MAC address exists in the pre-stored corresponding relationships, whether to authorize the access of the DLNA client according to a key corresponding to the MAC address included in the pre-stored corresponding relationships;
the method being **characterized in that**:
the step (208) of determining whether to authorize the access of the DLNA client according to a key corresponding to the MAC address included in the pre-stored corresponding relationships comprises:
obtaining the key corresponding to the MAC address according to the pre-stored corresponding relationships;
judging whether a key is carried in the access request sent from the DLNA client;
authorizing the access of the DLNA client, if a key is carried in the access request and the carried key matches the key corresponding to the MAC address; and
denying the access of the DLNA client, if no key is carried in the access request or the carried key does not match the key corresponding to the MAC address.

2. The method according to claim 1, wherein the method further comprises the steps (207) of:
generating a key corresponding to the MAC address, if the MAC address does not exist in the pre-stored corresponding relationships;
adding the MAC address and the key corresponding to the MAC address into the pre-stored corresponding relationships; and
sending the key to the DLNA client which the MAC address corresponds to.

3. The method according to any one of claims 1 to 2, wherein the method further comprises:
obtaining (203) the preset blacklist which includes illegal MAC addresses and/or MAC addresses having no access right.

4. An apparatus for controlling access applied in a Digital Living Network Alliance, DLNA, server, comprising:
a request receiving module (310) configured to receive an access request sent from a DLNA client;
an address obtaining module (320) configured to obtain a Medium/Media Access Control, MAC, address used by the DLNA client;
an address detecting module (330) configured to detect whether the MAC address exists in a preset blacklist;
an access denying module (340) configured to deny an access of the DLNA client, if the MAC address exists in the preset blacklist;
an address searching module (350) configured to search the MAC address from pre-stored corresponding relationships to determine whether the MAC address exists in the pre-stored corresponding relationships if the MAC address does not exist in the preset blacklist, the pre-stored corresponding relationships comprising corresponding relationships between different MAC addresses and different keys, the MAC addresses in the pre-stored corresponding relationships being MAC addresses of DLNA clients which have ever successfully built access connection; and an access determining module (370) configured to determine, if the MAC address exists in the pre-stored corresponding relationships, whether to authorize the access of the DLNA client according to a key corresponding to the MAC address included in the pre-stored corresponding relationships, the apparatus being **characterized in that** the access determining module (370) comprises a key obtaining unit (370a), a key judging unit (370b), an access authorizing unit (370c) and an access denying unit (370d);
the key obtaining unit (370a) is configured to obtain the key corresponding to the MAC address according to the pre-stored corresponding relationships;
the key judging unit (370b) is configured to judge whether a key is carried in the access request sent from the DLNA client;
the access authorizing unit (370c) is configured to authorize the access of the DLNA client if a key is carried in the access request and the carried key matches the key corresponding to the MAC address; and
the access denying unit (370d) is configured to deny the access of the DLNA client if no key is carried in the access request or the carried key does not match the key corresponding to the MAC address.

5. The apparatus according to claim 4, wherein the apparatus further comprises:
a key generating module (362) configured to generate a key corresponding to the MAC address if the MAC address does not exist in the pre-stored corresponding relationships;
a corresponding storing module (364) configured to add the MAC address and the key corresponding to the MAC address into the pre-stored corresponding relationships; and
a key sending module (366) configured to send the key to the DLNA client to which the MAC address corresponds.

6. The apparatus according to any one of claims 3 to 5, wherein the apparatus further comprises:
a list obtaining module (322) configured to obtain the preset blacklist which includes illegal MAC addresses and/or MAC addresses having no access right.

7. An apparatus (500) according to claim 4 comprising:
a processor (522); and
a memory (532) for storing instructions executable by the processor;
wherein the processor (522) is configured to:
receive an access request sent from a Digital Living Network Alliance, DLNA, client;
obtain a Medium/Media Access Control, MAC, address used by the DLNA client;
detect whether the MAC address exists in a preset blacklist;
deny an access of the DLNA client, if the MAC address exists in the preset blacklist;
search, if the MAC address does not exist in the preset blacklist, the MAC address from pre-stored corresponding relationships to determine whether the MAC address exists in the pre-stored corresponding relationships, the pre-stored corresponding relationships comprising corresponding relationships between different MAC addresses and different keys, the MAC addresses in the pre-stored corresponding relationships being MAC addresses of DLNA clients which have ever successfully built access connection; and
determine, if the MAC address exists in the pre-stored corresponding relationships, whether to authorize the access of the DLNA client according to a key corresponding to the MAC address included in the pre-stored corresponding relationships, wherein the processor is further configurated to determine whether to authorize the access of the DLNA client according to a key corresponding to the MAC address included in the pre-stored corresponding relationships comprises:
obtain the key corresponding to the MAC address according to the pre-stored corresponding relationships;
judge whether a key is carried in the access request sent from the DLNA client;
authorize the access of the DLNA client, if a key is carried in the access request and the carried key matches the key corresponding to the MAC address; and

8. A computer program which, when being executed on a processor of an apparatus, performs a method according to any one of claims 1 to 3.

9. A recording medium readable by a computer and having recorded thereon a computer program including instructions for executing the steps of a method for controlling access according to any one of claims 1 to 3.

## Patentansprüche

1. Verfahren zur Zugangskontrolle, das in einem Digital-Living-Network-Alliance-(DLNA)-Server angewandt wird, umfassend die Schritte des:
Empfangens (102, 201) einer Zugangsanforderung, die von einem DLNA-Client gesendet wird,
Erhaltens (104, 202) einer Medium/Medien-Zugangssteuerungs-(MAC)-Adresse, die von dem DLNA-Client verwendet wird,
Detektierens (106, 204), ob die MAC-Adresse in einer voreingestellten Blacklist vorhanden ist,
Verweigerns (108, 205) eines Zugangs des DLNA-Clients, wenn die MAC-Adresse in der voreingestellten Blacklist vorhanden ist,
Suchens (206), wenn die MAC-Adresse nicht in der voreingestellten Blacklist vorhanden ist, der MAC-Adresse aus vorgespeicherten entsprechenden Beziehungen, um zu bestimmen, ob die MAC-Adresse in den vorgespeicherten entsprechenden Beziehungen vorhanden ist, wobei die vorgespeicherten entsprechenden Beziehungen entsprechende Beziehungen zwischen verschiedenen MAC-Adressen und verschiedenen Schlüsseln umfassen, wobei die MAC-Adressen in den vorgespeicherten entsprechenden Beziehungen MAC-Adressen von DLNA-Clients sind, die jemals zuvor erfolgreich eine Zugangsverbindung aufgebaut haben, und
Bestimmens (208), wenn die MAC-Adresse in den vorgespeicherten entsprechenden Beziehungen vorhanden ist, ob der Zugang des DLNA-Clients gemäß einem Schlüssel genehmigt werden soll, welcher der MAC-Adresse entspricht, die in den vorgespeicherten entsprechenden Beziehungen enthalten ist,
wobei das Verfahren **dadurch gekennzeichnet ist, dass**:
der Schritt (208) des Bestimmens, ob der Zugang des DNLA-Clients gemäß einem Schlüssel genehmigt werden soll, welcher der MAC-Adresse entspricht, die in den vorgespeicherten entsprechenden Beziehungen enthalten ist, umfasst:
Erhalten des Schlüssels, welcher gemäß den vorgespeicherten entsprechenden Beziehungen der MAC-Adresse entspricht,
Beurteilen, ob ein Schlüssel in der Zugangsanforderung, die von dem DLNA-Client gesendet wird, mitgeführt wird,
Genehmigen des Zugangs des DLNA-Clients, wenn in der Zugangsanforderung ein Schlüssel mitgeführt wird und der mitgeführte Schlüssel mit dem Schlüssel, welcher der MAC-Adresse entspricht, übereinstimmt, und
Verweigern des Zugangs des DNLA-Clients, wenn in der Zugangsanforderung kein Schlüssel mitgeführt wird oder der mitgeführte Schlüssel nicht mit dem Schlüssel, welcher der MAC-Adresse entspricht, übereinstimmt.

2. Verfahren nach Anspruch 1, wobei das Verfahren ferner umfasst die Schritte (207) des:
Erzeugens eines Schlüssels, weicher der MAC-Adresse entspricht, wenn die MAC-Adresse nicht in den vorgespeicherten entsprechenden Beziehungen vorhanden ist,
Hinzufügens der MAC-Adresse und des Schlüssels, welcher der MAC-Adresse entspricht, zu den vorgespeicherten entsprechenden Beziehungen, und
Sendens des Schlüssels an den DLNA-Client, dem die MAC-Adresse entspricht.

3. Verfahren nach einem beliebigen der Ansprüche 1 bis 2, wobei das Verfahren ferner umfasst:
Erhalten (203) der voreingestellten Blacklist, die illegale MAC-Adressen und/oder MAC-Adressen, welche kein Zugangsrecht haben, umfasst.

4. Vorrichtung zur Zugangskontrolle, die in einem Digital-Living-Network-Alliance-(DLNA)-Server angewandt wird, umfassend:
ein Anforderungsempfangsmodul (310), das dazu ausgebildet ist, eine Zugangsanforderung, die von einem DLNA-Client gesendet wird, zu empfangen,
ein Adressenerhaltungsmodul (320), das dazu ausgebildet ist, eine Medium/Medien-Zugangssteuerungs-(MAC)-Adresse, die von dem DLNA-Client verwendet wird, zu erhalten,
ein Adressendetektiermodul (330), das dazu ausgebildet ist, zu detektieren, ob die MAC-Adresse in einer voreingestellten Blacklist vorhanden ist,
ein Adressenverweigerungsmodul (340), das dazu ausgebildet ist, einen Zugang des DLNA-Clients zu verweigern, wenn die MAC-Adresse in der voreingestellten Blacklist vorhanden ist,
ein Adressensuchmodul (350), das dazu ausgebildet ist, die MAC-Adresse aus vorgespeicherten entsprechenden Beziehungen zu suchen, um zu bestimmen, ob die MAC-Adresse in den vorgespeicherten entsprechenden Beziehungen vorhanden ist, wenn die MAC-Adresse nicht in der voreingestellten Blacklist vorhanden ist, wobei die vorgespeicherten entsprechenden Beziehungen entsprechende Beziehungen zwischen verschiedenen MAC-Adressen und verschiedenen Schlüsseln umfassen, wobei die MAC-Adressen in den vorgespeicherten entsprechenden Beziehungen MAC-Adressen von DLNA-Clients sind, die jemals zuvor erfolgreich eine Zugangsverbindung aufgebaut haben, und
ein Zugangsbestimmungsmodul (370), das dazu ausgebildet ist, zu bestimmen, wenn die MAC-Adresse in den vorgespeicherten entsprechenden Beziehungen vorhanden ist, ob der Zugang des DLNA-Clients gemäß einem Schlüssel, welcher der MAC-Adresse entspricht, die in den vorgespeicherten entsprechenden Beziehungen enthalten ist, genehmigt werden soll, wobei die Vorrichtung **dadurch gekennzeichnet ist, dass** das Zugangsbestimmungsmodul (370) eine Schlüsselerhaltungseinheit (370a), eine Schlüsselbeurteilungseinheit (370b), eine Zugangsgenehmigungseinheit (370c) und eine Zugangsverweigerungseinheit (370d) umfasst,
die Schlüsselerhaltungseinheit (370a) dazu ausgebildet ist, den Schlüssel, welcher gemäß den vorgespeicherten entsprechenden Beziehungen der MAC-Adresse entspricht, zu erhalten,
die Schlüsselbeurteilungseinheit (370b) dazu ausgebildet ist, zu beurteilen, ob ein Schlüssel in der Zugangsanforderung, die von dem DLNA-Client gesendet wird, mitgeführt wird,
die Zugangsgenehmigungseinheit (370c) dazu ausgebildet ist, den Zugang des DLNA-Clients zu genehmigen, wenn in der Zugangsanforderung ein Schlüssel mitgeführt wird und der mitgeführte Schlüssel mit dem Schlüssel, welcher der MAC-Adresse entspricht, übereinstimmt, und
die Zugangsverweigerungseinheit (370d) dazu ausgebildet ist, den Zugang des DLNA-Clients zu verweigern, wenn in der Zugangsanforderung kein Schlüssel mitgeführt wird oder der mitgeführte Schlüssel nicht mit dem Schlüssel, welcher der MAC-Adresse entspricht, übereinstimmt.

5. Vorrichtung nach Anspruch 4, wobei die Vorrichtung ferner umfasst:
ein Schlüsselerzeugungsmodul (362), das dazu ausgebildet ist, einen Schlüssel zu erzeugen, welcher der MAC-Adresse entspricht, wenn die MAC-Adresse nicht in den vorgespeicherten entsprechenden Beziehungen vorhanden ist,
ein entsprechendes Speichermodul (364), das dazu ausgebildet ist, die MAC-Adresse und den Schlüssel, welcher der MAC-Adresse entspricht, zu den vorgespeicherten entsprechenden Beziehungen hinzuzufügen, und
ein Schlüsselsendemodul (366), das dazu ausgebildet ist, den Schlüssel an den DLNA-Cfient, dem die MAC-Adresse entspricht, zu senden.

6. Vorrichtung nach einem beliebigen der Ansprüche 3 bis 5, wobei die Vorrichtung ferner umfasst:
ein Listenerhaltungsmodul (322), das dazu ausgebildet ist, die voreingestellte Blacklist zu erhalten, die illegale MAC-Adressen und/oder MAC-Adressen, die kein Zugangsrecht haben, umfasst.

7. Vorrichtung (500) nach Anspruch 4, umfassend:
einen Prozessor (522), und
einen Speicher (532) zum Speichern von Anweisungen, die von dem Prozessor ausführbar sind,
wobei der Prozessor (522) dazu ausgebildet ist:
eine Zugangsanforderung, die von einem Digital-Living-Network-Alliance-(DLNA)-Client gesendet wird, zu empfangen,
eine Medium/Medien-Zugangssteuerungs-(MAC)-Adresse, die von dem DLNA-Client verwendet wird, zu erhalten,
zu detektieren, ob die MAC-Adresse in einer voreingestellten Blacklist vorhanden ist,
einen Zugang des DLNA-Clients zu verweigern, wenn die MAC-Adresse in der voreingestellten Blacklist vorhanden ist,
wenn die MAC-Adresse nicht in der voreingestellten Blacklist vorhanden ist, die MAC-Adresse aus vorgespeicherten entsprechenden Beziehungen zu suchen, um zu bestimmen, ob die MAC-Adresse in den vorgespeicherten entsprechenden Beziehungen vorhanden ist, wobei die vorgespeicherten entsprechenden Beziehungen entsprechende Beziehungen zwischen verschiedenen MAC-Adressen und verschiedenen Schlüsseln umfassen, wobei die MAC-Adressen in den vorgespeicherten entsprechenden Beziehungen MAC-Adressen von DLNA-Clients sind, die jemals zuvor erfolgreich eine Zugangsverbindung aufgebaut haben, und,
wenn die MAC-Adresse in den vorgespeicherten entsprechenden Beziehungen vorhanden ist, zu bestimmen, ob der Zugang des DLNA-Clients gemäß einem Schlüssel, welcher der MAC-Adresse entspricht, die in den vorgespeicherten entsprechenden Beziehungen enthalten ist, genehmigt werden soll, wobei der Prozessor ferner dazu ausgebildet ist, zu bestimmen, ob der Zugang des DLNA-Clients gemäß einem Schlüssel, welcher der MAC-Adresse entspricht, die in den vorgespeicherten entsprechenden Beziehungen enthalten ist, genehmigt werden soll, umfassend:
den Schlüssel, welcher gemäß den vorgespeicherten entsprechenden Beziehungen der MAC-Adresse entspricht, zu erhalten,
zu beurteilen, ob ein Schlüssel in der Zugangsanforderung, die von dem DLNA-Client gesendet wird, mitgeführt wird,
den Zugang des DLNA-Clients zu genehmigen, wenn in der Zugangsanforderung ein Schlüssel mitgeführt wird und der mitgeführte Schlüssel mit dem Schlüssel, welcher der MAC-Adresse entspricht, übereinstimmt, und

8. Rechnerprogramm, welches, wenn es auf einem Prozessor einer Vorrichtung ausgeführt wird, ein Verfahren nach einem beliebigen der Ansprüche 1 bis 3 ausführt.

9. Aufzeichnungsmedium, das von einem Rechner lesbar ist und darauf aufgezeichnet ein Rechnerprogramm aufweist, umfassend Anweisungen zum Ausführen der Schritte eines Zugangssteuerungsverfahrens nach einem beliebigen der Ansprüche 1 bis 3.

## Revendications

1. Procédé pour contrôler l'accès appliqué dans un serveur DLNA, Digital Living Network Alliance (Alliance de Réseau Domestique Numérique), comprenant les étapes consistant à :
recevoir (102, 201) une demande d'accès envoyée depuis un client DLNA ;
obtenir (104, 202) une adresse MAC, Contrôle d'Accès au(x) Support/Supports, utilisée par le client DLNA ;
détecter (106, 204) si l'adresse MAC existe dans une liste noire prédéfinie ;
refuser (108, 205) un accès du client DLNA, si l'adresse MAC existe dans la liste noire prédéfinie ;
rechercher (206), si l'adresse MAC n'existe pas dans la liste noire prédéfinie, l'adresse MAC à partir de relations correspondantes pré-stockées pour déterminer si l'adresse MAC existe dans les relations correspondantes pré-stockées, les relations correspondantes pré-stockées comprenant des relations correspondantes entre différentes adresses MAC et différentes clés, les adresses MAC dans les relations correspondantes pré-stockées étant des adresses MAC de clients DLNA qui ont déjà créé une connexion d'accès avec succès ; et
déterminer (208), si l'adresse MAC existe dans les relations correspondantes pré-stockées, si autoriser l'accès du client DLNA en fonction d'une clé correspondant à l'adresse MAC incluse dans les relations correspondantes pré-stockées ;
le procédé étant **caractérisé en ce que** :
l'étape (208) de détermination de si autoriser l'accès du client DLNA en fonction d'une clé correspondant à l'adresse MAC incluse dans les relations correspondantes pré-stockées comprend :
l'obtention de la clé correspondant à l'adresse MAC en fonction des relations correspondantes pré-stockées ;
le jugement de si une clé est acheminée dans la demande d'accès envoyée depuis le client DLNA ;
l'autorisation de l'accès du client DLNA, si une clé est acheminée dans la demande d'accès et que la clé acheminée concorde avec la clé correspondant à l'adresse MAC ; et
le refus de l'accès du client DLNA, si aucune clé n'est acheminée dans la demande d'accès ou que la clé acheminée ne concorde pas avec la clé correspondant à l'adresse MAC.

2. Procédé selon la revendication 1, dans lequel le procédé comprend en outre les étapes (207) consistant à :
générer une clé correspondant à l'adresse MAC, si l'adresse MAC n'existe pas dans les relations correspondantes pré-stockées ;
ajouter l'adresse MAC et la clé correspondant à l'adresse MAC dans les relations correspondantes pré-stockées ; et
envoyer la clé au client DLNA auquel l'adresse MAC correspond.

3. Procédé selon l'une quelconque des revendications 1 à 2, dans lequel le procédé comprend en outre :
l'obtention (203) de la liste noire prédéfinie qui inclut des adresses MAC illégales et/ou des adresses MAC n'ayant pas de droit d'accès.

4. Appareil pour contrôler l'accès appliqué dans un serveur DLNA, Digital Living Network Alliance, comprenant :
un module de réception de demande (310) configuré pour recevoir une demande d'accès envoyée depuis un client DLNA ;
un module d'obtention d'adresse (320) configuré pour obtenir une adresse MAC, Contrôle d'Accès au(x) Support/Supports, utilisée par le client DLNA ;
un module de détection d'adresse (330) configuré pour détecter si l'adresse MAC existe dans une liste noire prédéfinie ;
un module de refus d'accès (340) configuré pour refuser un accès du client DLNA, si l'adresse MAC existe dans la liste noire prédéfinie ;
un module de recherche d'adresse (350) configuré pour rechercher l'adresse MAC à partir de relations correspondantes pré-stockées pour déterminer si l'adresse MAC existe dans les relations correspondantes pré-stockées si l'adresse MAC n'existe pas dans la liste noire prédéfinie, les relations correspondantes pré-stockées comprenant des relations correspondantes entre différentes adresses MAC et différentes clés, les adresses MAC dans les relations correspondantes pré-stockées étant des adresses MAC de clients DLNA qui ont déjà créé une connexion d'accès avec succès ; et
un module de détermination d'accès (370) configuré pour déterminer, si l'adresse MAC existe dans les relations correspondantes pré-stockées, si autoriser l'accès du client DLNA en fonction d'une clé correspondant à l'adresse MAC incluse dans les relations correspondantes pré-stockées, l'appareil étant **caractérisé en ce que** le module de détermination d'accès (370) comprend une unité d'obtention de clé (370a), une unité de jugement de clé (370b), une unité d'autorisation d'accès (370c) et une unité de refus d'accès (370d) ;
l'unité d'obtention de clé (370a) est configurée pour obtenir la clé correspondant à l'adresse MAC en fonction des relations correspondantes pré-stockées ;
l'unité de jugement de clé (370b) est configurée pour juger si une clé est acheminée dans la demande d'accès envoyée depuis le client DLNA ;
l'unité d'autorisation d'accès (370c) est configurée pour autoriser l'accès du client DLNA si une clé est acheminée dans la demande d'accès et que la clé acheminée concorde avec la clé correspondant à l'adresse MAC ; et
l'unité de refus d'accès (370d) est configurée pour refuser l'accès du client DLNA si aucune clé n'est acheminée dans la demande d'accès ou que la clé acheminée ne concorde pas avec la clé correspondant à l'adresse MAC.

5. Appareil selon la revendication 4, dans lequel l'appareil comprend en outre :
un module de génération de clé (362) configuré pour générer une clé correspondant à l'adresse MAC si l'adresse MAC n'existe pas dans les relations correspondantes pré-stockées ;
un module de stockage correspondant (364) configuré pour ajouter l'adresse MAC et la clé correspondant à l'adresse MAC dans les relations correspondantes pré-stockées ; et
un module d'envoi de clé (366) configuré pour envoyer la clé au client DLNA auquel l'adresse MAC correspond.

6. Appareil selon l'une quelconque des revendications 3 à 5, dans lequel l'appareil comprend en outre :
un module d'obtention de liste (322) configuré pour obtenir la liste noire prédéfinie qui inclut des adresses MAC illégales et/ou des adresses MAC n'ayant pas de droit d'accès.

7. Appareil (500) selon la revendication 4 comprenant :
un processeur (522) ; et
une mémoire (532) pour stocker des instructions exécutables par le processeur ;
dans lequel le processeur (522) est configuré pour :
recevoir une demande d'accès envoyée depuis un client DLNA, Digital Living Network Alliance ;
obtenir une adresse MAC, Contrôle d'Accès au(x) Support/Supports, utilisée par le client DLNA ;
détecter si l'adresse MAC existe dans une liste noire prédéfinie ;
refuser un accès du client DLNA, si l'adresse MAC existe dans la liste noire prédéfinie ;
rechercher, si l'adresse MAC n'existe pas dans la liste noire prédéfinie, l'adresse MAC à partir de relations correspondantes pré-stockées pour déterminer si l'adresse MAC existe dans les relations correspondantes pré-stockées, les relations correspondantes pré-stockées comprenant des relations correspondantes entre différentes adresses MAC et différentes clés, les adresses MAC dans les relations correspondantes pré-stockées étant des adresses MAC de clients DLNA qui ont déjà créé une connexion d'accès avec succès ; et
déterminer, si l'adresse MAC existe dans les relations correspondantes pré-stockées, si autoriser l'accès du client DLNA en fonction d'une clé correspondant à l'adresse MAC incluse dans les relations correspondantes pré-stockées, où le processeur est en outre configuré pour déterminer si autoriser l'accès du client DLNA en fonction d'une clé correspondant à l'adresse MAC incluse dans les relations correspondantes pré-stockées comprend :
obtenir la clé correspondant à l'adresse MAC en fonction des relations correspondantes pré-stockées ;
juger si une clé est acheminée dans la demande d'accès envoyée depuis le client DLNA ;
autoriser l'accès du client DLNA, si une clé est acheminée dans la demande d'accès et que la clé acheminée concorde avec la clé correspondant à l'adresse MAC.

8. Programme d'ordinateur qui, lorsqu'il est exécuté sur un processeur d'un appareil, effectue un procédé selon l'une quelconque des revendications 1 à 3.

9. Support d'enregistrement lisible par un ordinateur et sur lequel est enregistré un programme d'ordinateur incluant des instructions pour exécuter les étapes d'un procédé pour contrôler l'accès selon l'une quelconque des revendications 1 à 3.
